# EUROPÄISCHE PATENTSCHRIFT

(11) **EP 0 549 556 B1**
(45) Veröffentlichungstag und Bekanntmachung des Hinweises auf die Patenterteilung: **22.03.1995**
(21) Anmeldenummer: 92890209.7
(22) Anmeldetag: 30.09.1992
(51) Int. Cl.: B65G 49/06

(54) **Vorrichtung zum Fördern von Isolierglasscheiben**
Device for conveying insulating glass panes
Dispositif pour convoyer des plaques de verre isolantes

(30) Priorität: 23.12.1991 AT 2557/91
(43) Veröffentlichungstag der Anmeldung: 30.06.1993
(73) Patentinhaber: Lisec, Peter, 3363 Amstetten-Hausmening (AT)
(72) Erfinder: Lisec, Peter, 3363 Amstetten-Hausmening (AT)
(74) Vertreter: Beer, Manfred, Dipl.-Ing.

(56) Entgegenhaltungen:
- AT-B- 384 596

## Beschreibung

Die Erfindung betrifft eine Vorrichtung zum Fördern von gegenüber der Lotrechten etwas geneigten Isolierglasscheiben gemäß dem Oberbegriff des Anspruchs 1.

Eine Vorrichtung zum Fördern von Isolierglasscheiben ist aus der AT-B-384 596 oder der DE-B-30 38 425 und aus der DE-B-40 29 669 bekannt. Diese bekannten Vorrichtungen haben sich zum Transport von Isolierglasscheiben im Bereich von Versiegelungsmaschinen, insbesondere für den Transport von Isolierglasscheiben während und nach dem Versiegeln bewährt.

Neben Isolierglasscheiben, deren Glastafeln gleich groß sind, so daß die Außenränder der Glastafeln in gemeinsamen, zur Flächenerstreckung der Isolierglasscheibe senkrecht stehenden Ebenen liegen, gibt es auch Isolierglasscheiben, deren Glastafeln eine unterschiedliche Größe aufweisen. So gibt es Isolierglasscheiben, bei welchen eine der Glastafeln wenigstens an einem Rand der Isolierglasscheibe über die andere Glastafel vorsteht. In diesem Fall ist der Abstandhalterrahmen so angeordnet, daß er der Kontur der kleineren Glastafel im wesentlichen folgt. Das Fördern derartiger Isolierglasscheiben (die auch "Stufenelemente" genannt werden) ist mit den bekannten Vorrichtungen nicht möglich. Daher werden solche Isolierglasscheiben bislang von Hand aus, horizontal liegend versiegelt, weil der Transport von Isolierglasscheiben, die als Stufenelemente ausgebildet sind, während und nach dem Versiegeln mit den bekannten Vertikalförderern nicht bzw. nicht ohne weiteres möglich ist.

Der Erfindung liegt die Aufgabe zugrunde, die eingangs bekannte Vorrichtung so weiterzubilden, daß mit ihr auch Stufenelemente, insbesondere während (nur ein Teil der Randfuge ist mit Versiegelungsmasse gefüllt) und nach dem Versiegeln problemlos transportiert werden können.

Erfindungsgemäß wird diese Aufgabe durch die Merkmale des Anspruchs 1 gelöst.

Durch die erfindungsgemäße Ausbildung kann die Fördervorrichtung an den an wenigstens einem Rand einer Isolierglasscheibe gegebenen Überstand der einen Glastafel gegenüber der anderen Glastafel dadurch angepaßt werden, daß die Auflager auf Abstand der Ränder eingestellt werden. Werden die Auflager so eingestellt, daß sie gleich hoch liegen, können mit der erfindungsgemäßen Vorrichtung auch Isolierglasscheiben transportiert werden, deren beim Transport unten befindlichen Ränder der Glastafeln in einer zur Isolierglasscheibe senkrechten Ebene liegen.

Die seitliche Abstützung der Isolierglasscheiben kann wie in der AT-B-384 596 oder der DE-B-30 38 425 beschrieben, mit einer Abstützeinrichtung erfolgen, die an einen Balken montierte, um im wesentlichen lotrechte Achsen frei drehbare Stützrollen aufweist, gegen welche die Isolierglasscheibe nur im Bereich ihrer oberen Kante anliegt. Das Abstützen der Isolierglasscheibe kann aber auch durch ein Stützrollen- oder Stützwalzenfeld oder aber mit Hilfe eines Luftkissens ("Luftkissenwand") erfolgen. Alle genannten Möglichkeiten des seitlichen Abstützens der Isolierglasscheibe können problemlos verwendet werden, da die Isolierglasscheibe vom erfindungsgemaß ausgebildeten Förderelement, das im Bereich des unteren Randes der Isolierglasscheibe angreift, hinreichend genau geführt wird.

Bevorzugte und vorteilhafte Ausgestaltungen der Erfindung sind Gegenstand der Unteransprüche.

Weitere Einzelheiten und Merkmale der Erfindung ergeben sich aus der nachstehenden Beschreibung von Ausführungsformen der Erfindung, die auf die angeschlossenen Zeichnungen Bezug nimmt.

Es zeigt:
Fig. 1 im Vertikalschnitt eine erste Ausführungsform der erfindungsgemäßen Vorrichtung;
Fig. 2 schematisch eine zweite Ausführungsform; und
Fig. 3 schematisch eine dritte Ausführungsform.

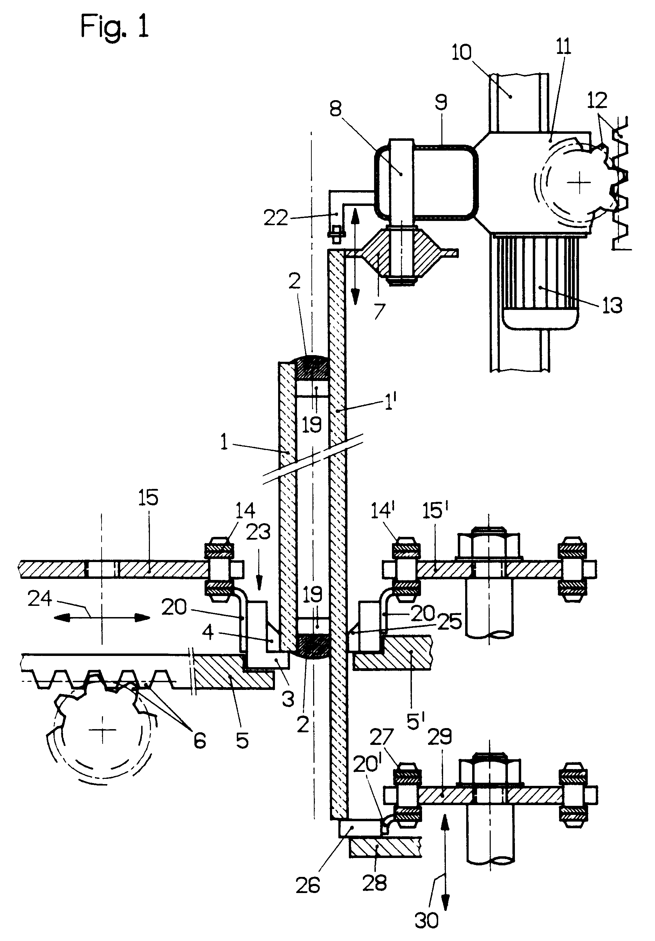

In Fig. 1 ist eine aus zwei unterschiedlich großen Glastafeln 1, 1' mit dazwischengefügtem Abstandhalterrahmen 19 bestehende Isolierglasscheibe gezeigt, deren Randfuge mit Füllmasse 2 gefüllt ist, wobei die Füllmasse 2, wie in der Zeichnung gezeigt die inneren Kanten der Ränder der kleineren Glastafel 1 übergreifen kann.

Die Isolierglasscheibe wird am unteren Rand ihrer kleineren (gegenüber der anderen Glastafel 1' rückspringenden) Glastafel 1 von Auflagern 3 abgestützt, die eine im wesentlichen horizontale Auflagefläche besitzen.

Wie Fig. 1 zeigt, übergreifen die Auflager 3 den unteren Rand der Glastafel 1 nur teilweise und zwar nur im Bereich der äußeren Kante des unteren Randes der Glastafel.

Im in Fig. 1 gezeigten Ausführungsbeispiel sind die Auflager 3 Teile von im wesentlichen L-förmigen Tragelementen 23, an deren vertikalen Schenkeln Druckbacken 4 vorgesehen sind, die gegen die Außenfläche der Glastafel 1, im Bereich des Abstandhalterrahmens 19 anliegen.

Die Tragelemente 23 sind über Laschen 20 an einer Förderkette 14 befestigt, die um Antriebs- bzw. Umlenkräder 15 läuft und von diesen angetrieben wird.

Es ist noch eine Führungsschiene 5 vorgesehen, welche die Tragelemente 23 unterstützt und auf der die Tragelemente 23 bei ihrer Bewegung in Förderrichtung (senkrecht zur Bildebene) gleiten.

Die Anordnung aus Förderkette 14, Antriebs- bzw. Umlenkzahnrädern 15 und Führungschiene 5 und damit auch die Tragelemente 23 sind mittels eines Zahnstangen-Ritzelantriebes 6 (oder einem Pneumatikzylinderantrieb od.dgl. Stellantrieb) in Richtung des Doppelpfeiles 24 verstellbar, um die Auflager 3 und die Druckbacken 4 an die Lage des unteren Randes der Glastafel 1 anzupassen, was notwendig ist, wenn die Vorrichtung für den Transport von Isolierglasscheiben mit verschieden Abstandhalterrahmenbreiten oder Glasstärken also verschiedenen Außendicken entsprechend einzustellen ist.

Die Isolierglasscheibe wird im Bereich des oberen Randes ihrer Glastafel 1' von Stützrollen 7 abgestützt, die an einem Träger 9 um im wesentlichen vertikale Achsen 8 frei drehbar sind. Diese Stützrollen 7 definieren zusammen mit der Fördereinrichtung, die am unteren Rand der Isolierglasscheibe angreift, die Förderebene, die um 5 bis 6° gegen die Vertikale geneigt ist (nicht dargestellt).

Damit die Stützrollen 7 auch bei verschieden großen Isolierglasscheiben jeweils im Bereich des oberen Randes der Glastafel 1' angeordnet werden können, ist der Träger 9 über einen Führungsschuh 11 an einem Rahmen 10 der Vorrichtung auf und ab verschiebbar. Zum Verschieben ist ein Antriebsmotor 13 und ein Zahnrad-Zahnstangengetriebe 12 vorgesehen. Ein Sensor 22 erfaßt der Höhe nach die Oberkante der Glastafel 1' und steuert den Antriebsmotor 13 an, der die Stützrollen 7 in eine solche Stellung bringt, daß sie, wie dies in der Zeichnung gezeigt ist, gegenüber dem oberen Rand der Glastafel 1' ausgerichtet sind.

Wie erwähnt, kann zum seitlichen Abstützen der Isolierglasscheibe auch ein Rollenfeld, eine Reihe Stützwalzen oder eine Luftkissenwand verwendet werden.

Zum Abstützen und Führen der größeren (über die Glastafel 1 vorspringenden) Glastafel 1' im Bereich ihres unteren Randes sind einerseits Druckbacken 25 und von diesen unabhängig angeordnete Auflager 26 vorgesehen. Die Druckbacken 25 sind über Laschen 20 an einer zur Endlosförderkette 14 parallelen Förderkette 14', die um Antriebs- bzw. Umlenkzahnräder 15' umläuft, befestigt. Zum Führen und Abstützen der Druckbacken 25 ist eine Führungsschiene 5' ähnlich der Führungsschiene 5 vorgesehen.

Die Auflager 26, die eine im wesentlichen horizontale, aber zur Förderebene senkrechte, obere Auflagefläche besitzen, sind über Laschen 20' an einer Förderkette 27 befestigt, die parallel zur Förderkette 14' ausgerichtet ist. Die Antriebs- bzw. Umlenkzahnräder 29 der Förderkette 27 können auf den selben Achsen bzw. Antriebswellen montiert sein, wie die Umlenk- bzw. Antriebszahnräder 15' der Förderkette 14'. Damit ist auf einfache Weise eine genau synchrone Bewegung der Druckbacken 25 und der Auflager 26 möglich.

Fig. 1 zeigt, daß die Druckbacken 25, so wie die Druckbacken 4 der Tragelemente 23 an der Außenseite der Glastafel 1' etwa im Bereich des unteren, horizontalen Schenkels des Abstandhalterrahmens 19 anliegen. Die Druckbacken 25 bewirken im Zusammenhang mit den Druckbacken 4 den sicheren Kraftschluß zwischen den Stütz- und Antriebselementen und der Isolierglasscheibe, so daß diese auch beim Versiegeln sicher und mit konstanter Geschwindigkeit transportiert wird, wobei noch vorgesehen ist, daß die Förderketten 14, 14' und 27, beispielsweise durch einen gemeinsamen Antrieb, genau synchron bewegt werden. Ein Beispiel für einen solchen Synchronantrieb ist in der AT-PS 384 596 gezeigt und beschrieben.

Um die Höhe der Auflager 26 an den Überstand der Glastafel 1' gegenüber dem unteren Rand der Glastafel 1 anzupassen, ist die Förderkette 27 mit ihren Antriebs- bzw. Umlenkzahnrädern 29 und die Führungsschiene 28 in Richtung des Pfeiles 30, d.h. im wesentlichen in einer zur Flächenerstreckung (= Förderebene) der Isolierglasscheibe parallelen Richtung auf und abbewegbar, so daß die Auflager 26 auf die erforderliche Höhe eingestellt werden können.

Im in Fig. 1 gezeigten Ausführungsbeispiel ist die Anordnung so getroffen, daß das in eine Druckbacke 25 und ein Auflager 26 geteilte Tragelement auf der Seite der Abstützung für die Isolierglasscheibe angeordnet ist. Es ist aber auch möglich, das abstützungsseitige Tragelement so wie aus der AT-PS 384 596 bekannt auszubilden und das gegenüberliegende Tragelement wie in Fig. 1 für die abstützungsseitigen Tragelemente mit getrennten Druckbacken 25 und Auflagern 26 gezeigt, auszubilden und in Richtung des Pfeiles 24 verschiebbar auszugestalten, um die Fördereinrichtung an unterschiedlich dicke Isolierglasscheiben anpassen zu können.

Die Druckbacken 4 und die Auflager 3 müssen nicht zwingend jeweils an einem Tragelement 23 vorgesehen sein. Es ist eine Ausführungsform denkbar, bei der Druckbacken 4 und Auflager 3 abwechselnd nebeneinander an der Förderkette 14 befestigt sind.

Obwohl bevorzugt, müssen die Auflager 26 nicht genau unterhalb einer Druckbacke 25 angeordnet sein.

Es ist, wenngleich bevorzugt, nicht zwingend, daß die Druckbacken 4 bzw. 25 einander genau gegenüberliegen.

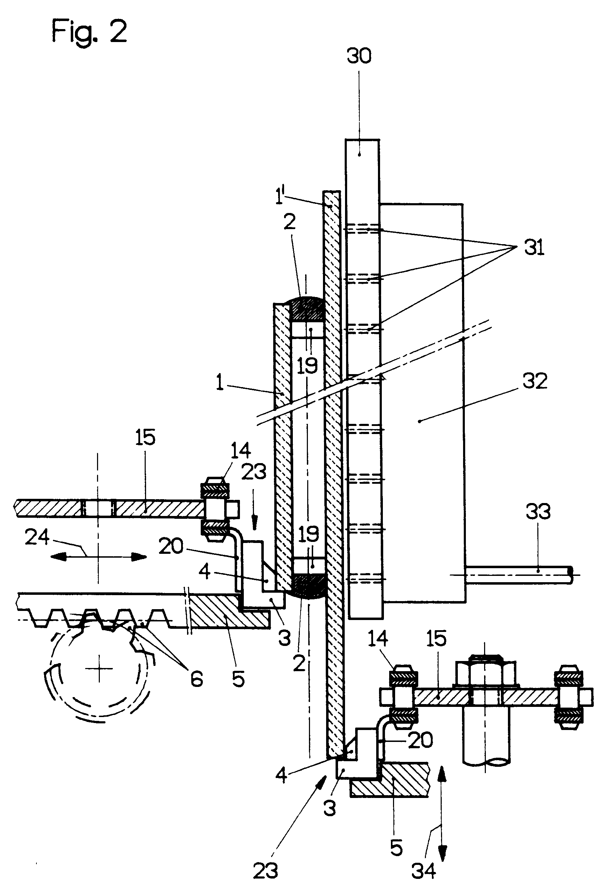

Bei der in Fig. 2 gezeigten Ausführungsform einer erfindungsgemäßen Fördervorrichtung sind die Auflager 3 auf beiden Seiten der Isolierglasscheibe mit den die Druckbacken 4 tragenden Tragelementen 23 vereinigt, wie dies an sich aus der AT-PS 384 596 bekannt ist.

Um die Auflager 3 auf den Abstand der Ränder der Glasscheiben 1 und 1' der Isolierglasscheibe einstellen zu können, ist im gezeigten Ausführungsbeispiel die Anordnung aus Führungsschiene 5, Antriebs- bzw. Umlenkzahnrädern 15, Förderkette 14, Laschen 20 und Tragelementen 23 auf der Seite der größeren Glastafel 1' in Höhenrichtung, d.h. parallel zur Förderebene (= Ebene der Isolierglasscheibe) in Richtung des Doppelpfeiles 34 verstellbar.

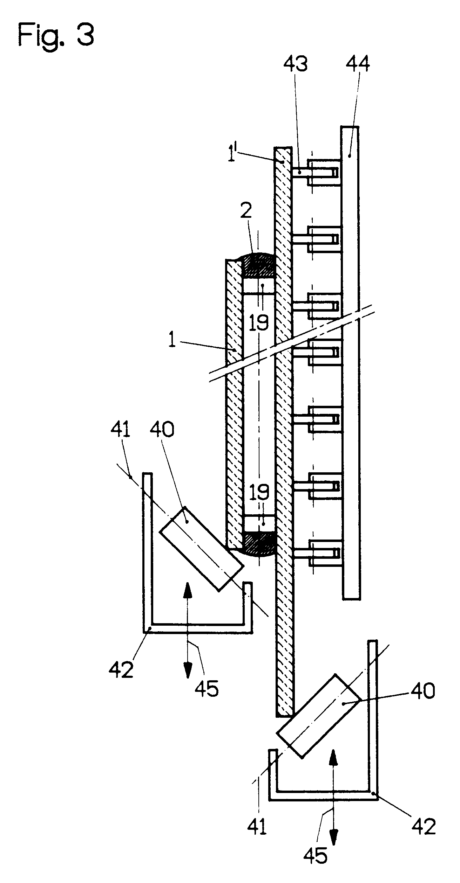

Es ist auch eine Ausführungsform denkbar, bei der die Tragelemente 23 mit den Auflagern 3 und den zugeordneten Bauteilen auf der Seite der kleineren Glastafel 1 der Isolierglasscheibe in Höhenrichtung verstellbar sind. Diese letztere Variante hat den Vorteil, daß sich keine Probleme mit der Ausrichtung des Förderelementes (Förderketten 14 mit Tragelementen 23 für die Auflager 3 und die Druckbacken 4 mit der seitlichen Abstützung ergeben. Die seitliche Abstützung ist im in Fig. 2 gezeigten Ausführungsbeispiel einer Vorrichtung gemäß der Erfindung als Luftkissenwand ausgebildet. Diese Luftkissenwand umfaßt eine Platte 30, in der Bohrungen 31 vorgesehen sind, die über einen Kasten 32 und einen Anschluß 33 mit Druckluft beaufschlagt werden können, so daß sich zwischen der der Wand 30 zugekehrten Glastafel 1' der Isolierglasscheibe und der Wand 30 ein Luftkissen ausbildet. Es versteht sich, daß bei der in Fig. 2 gezeigten Ausführungsform die seitliche Abstützung auch so wie in den Fig. 1 und 3 gezeigt, ausgeführt sein kann.

Bei der in Fig. 3 gezeigten Ausführungsform einer erfindungsgemäßen Vorrichtung sind die Auflager, die an den Außenkanten der unteren, horizontalen Ränder der Glastafeln 1 und 1' der Isolierglasscheibe angreifen, als zwei Reihen von schräggestellten Rollen 40 ausgebildet. Die Achsen 41 der Rollen 40 schließen mit der Förderbene (= Ebene der Isolierglasscheibe) vorzugsweise gleich große, spitze Winkel ein und sind bevorzugt so ausgerichtet, daß ihre Achse miteinander einen Winkel von beispielsweise 90° einschließen. Es sind aber auch andere zum Beispiel stumpfe Winkel zwischen den Achsen 41 der Rollen 40 möglich.

Die Rollen 40 sind in gemeinsamen, parallel zur Förderrichtung verlaufenden Trägern 42 drehbar gelagert und vorzugsweise über nicht naher gezeigte Antriebe angetrieben, um den Transport der Isolierglasscheibe zu bewirken.

Bei der in Fig. 3 gezeigten Ausführungsform ist zur seitlichen Abstützung der Isolierglasscheibe ein Rollenfeld mit Rollen 43 vorgesehen, die um vertikale Achsen an einem Maschinengestell 44 frei drehbar gelagert sind.

Es versteht sich, daß bei der in Fig. 3 gezeigten Ausführungsform deren grundsätzliche Ausbildung aus der DE-PS 40 29 669 bekannt ist, als seitliche Abstützung-für die Isolierglasscheiben auch eine Luftkissenwand gemäß Fig. 2 oder ein Balken 9 mit Stützrollen 7 gemäß Fig. 1 vorgesehen sein kann.

Um die Fördereinrichtung der Ausführungsform gemäß Fig. 3 an den Höhenabstand zwischen den unteren horizontalen Rändern der Glastafeln 1 und 1' der Isolierglasscheibe anpassen zu können, ist einer oder beide der Träger 42, bevorzugt der von der seitlichen Abstützung 43, 44 entfernt liegende Träger 42 mitsamt seinen Rollen 40 in Höhenrichtung (Pfeil 45) verstellbar. Zusätzlich kann dieser Träger 42, gegebenenfalls auch gemeinsam mit dem Träger 42 der abstützungsseitigen Rollen 40 wie im Prinzip aus der DE-PS 40 29 669 bekannt zur Anpassung an unterschiedlich dicke Isolierglasscheiben verstellbar sein. Die Verstelleinrichtung kann aber auch so wie in Fig. 1 ausgeführt und weiter oben im Zusammenhang mit Fig. 1 beschrieben, konstruiert sein.

Es ist noch darauf hinzuweisen, daß bei der in Fig. 3 gezeigten Ausführungsform anstelle der Rollen 40 auch endlose Förderriemen vorgesehen sein können, wie dies an sich aus der DE-PS 40 29 669 bekannt ist.

Gemaß einer nicht näher gezeigten Variante können bei der in Fig. 2 gezeigten Ausführungsform die Auflager 3 mit den Druckbacken 4 an den Halterungen 23 durch schräggestellte Auflager, die ähnlich wie die Rollen 40 lediglich an der äußeren Kante des unteren Randes der Isolierglasscheiben 1, 1' angreifen, ersetzt sein.

Zusammenfassend kann ein Beispiel der Erfindung wie folgt dargestellt werden:
Für den Transport versiegelter Isolierglasscheiben mit unterschiedlich großen Glastafeln 1, 1' ist eine Fördervorrichtung vorgesehen, die hakenartige Tragelemente 23 mit Druckbacken 4 und Auflagern 3 für die kleinere Glastafel 1 und an getrennten Förderketten 14' und 27 befestigte Druckbacken 25 und Auflager 26 für die größere, über die kleinere Glastafel 1 überstehende Glastafel 1' aufweist. Die Förderkette 27 mit den Auflagern 26 ist der Höhe nach verstellbar, so daß die Druckbacken 4 und 25 unabhängig vom Überstand der größeren Glastafel 1' stets im Bereich eines Abstandhalterrahmens zwischen den Glastafeln 1, 1' angreifen.

## Patentansprüche

1. Vorrichtung zum Fördern von gegenüber der Lotrechten etwas geneigten Isolierglasscheiben, deren Randfuge wenigstens zum Teil mit Füllmasse (2) gefüllt ist, mit Auflagern (3, 26, 40), die an den Glastafeln (1, 1') der Isolierglasscheiben auf beiden Seiten der Isolierglasscheiben im Bereich ihrer äußeren Kanten der unteren Ränder angreifen, und mit einer seitlichen Abstützung (7, 31, 43) für die Isolierglasscheiben, dadurch gekennzeichnet, daß die Auflager (3, 26, 40) auf wenigstens einer Seite einer Isolierglasscheibe mit verschieden großen Glastafeln (1, 1') unabhängig von den Auflagern (3, 26, 40) auf der anderen Seite der Isolierglasscheibe parallel zur Ebene der Isolierglasscheibe, d.h. im wesentlichen vertikal verstellbar sind.

2. Vorrichtung nach Anspruch 1, dadurch gekennzeichnet, daß die Auflager (3, 26) an sich in Förderrichtung bewegenden, endlosen Fördergliedern (14, 27) angeordnet sind, und daß die Auflager (3, 26) auf wenigstens einer Seite der Isolierglasscheibe unabhängig von den Auflagern (3, 26) auf der anderen Seite der Isolierglasscheibe im Maschinengestell, parallel zur Ebene der Isolierglasscheibe verstellbar geführt sind.

3. Vorrichtung nach Anspruch 1, dadurch gekennzeichnet, daß die Auflager frei drehbare und/oder angetriebene Rollen (40) sind, deren Drehachsen (41) zur Ebene der Isolierglasscheibe geneigt sind, daß die Achsen (41) der auf beiden Seiten der Isolierglasscheibe angeordneten Rollen (40) in einander schneidenden Ebenen liegen, und daß die Rollen (40) in Trägern (42) gelagert sind, deren parallel zur Ebene der Isolierglasscheiben gemessene Abstand veränderbar ist.

4. Vorrichtung nach Anspruch 1, dadurch gekennzeichnet, daß die Auflager von zwei, gegebenenfalls unterteilten Endlosförderbändern gebildet sind, wobei die Trume der Endlosförderbänder, auf denen die Glasscheiben aufstehen, mit der Ebene der Isolierglasscheibe spitze Winkel einschließen und in einander schneidenden Ebenen liegen.

5. Vorrichtung nach einem der Ansprüche 1 bis 4, dadurch gekennzeichnet, daß die Auflager (3, 26, 40) auf beiden, Seiten der Isolierglasscheibe parallel zur Ebene der Isolierglasscheibe, d.h. im wesentlichen vertikal und unabhängig voneinander verstellbar sind.

6. Vorrichtung nach einem der Ansprüche 1 bis 5, dadurch gekennzeichnet, daß der senkrecht zur Ebene der Isolierglasscheibe gemessene Abstand der Auflager (3, 26, 40) veränderbar ist.

7. Vorrichtung nach Anspruch 1, deren sich in Förderrichtung bewegende Auflager (3, 26) im wesentlichen waagrecht verlaufende Auflageflächen aufweisen, wobei die Auflageflächen die Glastafeln (1, 1') der Isolierglasscheibe von außen her und vorzugsweise teilweise im Bereich der äußeren Kante derselben untergreifen, und mit sich in Förderrichtung bewegenden Druckbacken (4, 25), die im wesentlichen lotrecht verlaufende Druckflächen aufweisen, die gegen die Außenflächen der Glastafeln (1, 1') der Isolierglasscheibe anliegen, dadurch gekennzeichnet, daß die Druckbacken (25) und die Auflager (26) auf wenigstens einer Seite der Isolierglasscheibe an getrennten Trägern (14, 27) angeordnet sind und daß der parallel zur Ebene der Isolierglasscheibe gemessene Abstand zwischen diesen Druckbacken (25) und den Auflagern (26) veränderbar ist.

8. Vorrichtung nach Anspruch 7, dadurch gekennzeichnet, daß die von den Druckbacken (25) getrennten Auflager (26) auf der Seite der seitlichen Abstützung (7) für die Isolierglasscheibe vorgesehen sind.

9. Vorrichtung nach Anspruch 7 oder 8, dadurch gekennzeichnet, daß sowohl den Druckbacken (25) als auch den Auflagern (26) Führungsschienen (5, 28) zugeordnet sind, auf welchen diese von oben her aufliegen.

10. Vorrichtung nach einem der Ansprüche 7 bis 9, dadurch gekennzeichnet, daß die Druckbacken (25) und die Auflager (26) an voneinander getrennten, zueinander parallel verlaufenden, endlosen Fördergliedern, wie Förderketten (14, 27) od.dgl. befestigt sind.

11. Verwendung einer Vorrichtung nach einem oder mehreren der Ansprüche 7 bis 10 zum Fördern von Isolierglasscheiben mit unterschiedlich großen Glastafeln (1, 1'), wobei eine Glastafel (1') über die andere (1) wenigstens auf einer Seite vorsteht, mit der Maßgabe, daß die rückspringende Glastafel (1) von den Druckbacken (4) aufweisenden Auflagern (3) abgestützt und die vorspringende Glastafel (1') von den Druckbacken (25) seitlich geführt und von den von diesen getrennten Auflagern (26) von unten her abgestützt wird, wobei die Druckbacken (4, 26) im wesentlichen im Bereich des in Förderrichtung verlaufenden, unteren Schenkels des Abstandhalterrahmens (19) angeordnet sind.

12. Verwendung nach Anspruch 11, mit der Maßgabe, daß die vorspringende Glastafel (1') der seitlichen Abstützung (7) zugekehrt ist.

## Claims

1. Device for conveying insulating glass panes slightly inclined to the vertical, and whose lateral joint is at least partly filled with filling compound (2), with supports (3,26,40) which engage on both sides of the insulating glass panes on the glass panels (1,1') of the insulating glass panes in the region of the external rims of their lower edges, and with a lateral support means (7,31,43) for the insulating glass panes, characterised in that the supports (3,26,40), on at least one side of an insulating glass pane with glass panels (1,1') of differing size, is displaceable independently of the supports (3,26,40) on the other side of the insulating glass pane, parallel to the plane of the insulating glass pane, i.e. substantially vertically.

2. Device according to Claim 1, characterised in that the supports (3,26) are disposed in endless conveyor members (14,27) moving in the conveyor direction, and in that the supports (3,26) are displaceably guided on at least one side of the insulating glass pane independently of the supports (3,26) on the other side of the insulating glass pane, in the machine frame, and parallel to the plane of the insulating glass pane.

3. Device according to Claim 1, characterised in that the supports are freely rotatable and/or driven rollers (40), whose axes of rotation (41) are inclined to the pane of the insulating glass pane, in that the axes (41) of the rollers (40) disposed on both sides of the insulating glass pane lie in mutually intersecting planes, and in that the rollers (40) are mounted in carriers (42) whose spacing measured parallel to the plane of the insulating glass pane is changeable.

4. Device according to Claim 1, characterised in that the supports are formed by two if necessary sub-divided endless conveyor belts, the lengths of the endless conveyor belts upon which the glass panes rest enclosing acute angles with the plane of the insulating glass pane, and lying on mutually-intersecting planes.

5. Device according to one of Claims 1-4, characterised in that the supports (3,26,40) are displaceable on both sides of the insulating glass pane parallel to the plane of the insulating glass pane, i.e. substantially vertically and independently of one another.

6. Device according to one of Claims 1- 5, characterised in that the spacing, measured vertically to the plane of the insulating glass pane, between the supports (3,26,40) is changeable.

7. Device according to Claim 1, whose supports (3,26) moving in the conveyor direction, have substantially horizontally extending support surfaces, the support surfaces engaging beneath the glass panels (1,1') of the insulating glass pane from the exterior and preferably partly in the region of the external rim of the same, and with pressure jaws (4,25) moving in the conveyor direction, and which have substantially vertically-extending pressure surfaces, which abut against the external surfaces of the glass panels (1,1') of the insulating glass pane, characterised in that the pressure jaws (25) and the supports (26) are disposed on at least one side of the insulating glass pane on separate carriers (14,27) and in that the spacing, measured parallel to the plane of the insulating glass pane, between these pressure jaws (25) and the supports (26) is changeable.

8. Device according to Claim 7, characterised in that the supports (26) separate from the pressure jaws (25) are provided on the side of the lateral support means (7) for the insulating glass panel.

9. Device according to Claim 7 or 8, characterised in that there are associated both with the pressure jaws (25) and the supports (26) guide rails (5,28) upon which the latter abut from above.

10. Device according to one of Claims 7-9, characterised in that the pressure jaws (25) and the supports (26) are secured on endless conveyor members, such as conveyor chains (14,27) or the like which are separate from one another, and extend parallel to one another.

11. Utilisation of a device according to one or more of Claims 7-10 in order to convey insulating glass panes with glass panels (1,1') of differing sizes, one glass panel (1') projecting above the other (1) on at least one side, on condition that the set-back glass panel (1) is supported by the supports (3) having pressure jaws (4), and the projecting glass panel (1') is laterally guided by the pressure jaws (25) and is supported from below by the supports (26) separate therefrom, the pressure jaws (4,26) being disposed substantially in the region of the lower arm of the spacer frame (19) extending in the conveyor direction.

12. Utilisation according to Claim 11, on condition that the projecting glass panel (1') faces the lateral support means (7).

## Revendications

1. Dispositif pour transporter des vitrages isolants qui sont quelque peu inclinés par rapport à la verticale et dont l'interstice périphérique est rempli au moins partiellement de masse de remplissage (2), comprenant des éléments de soutien (3, 26, 40) qui agissent sur les plaques de verre (1, 1') des vitrages isolants, sur les deux côtés de ces derniers, dans la zone des arêtes extérieures de leurs bords inférieurs, et un appui latéral (7, 31, 42) pour les vitrages isolants, **caractérisé** par le fait que les éléments de soutien (3, 26, 40) sont, sur au moins un côté d'un vitrage isolant ayant des plaques de verre (1, 1') de tailles différentes, réglables indépendamment des éléments de soutien (3, 26, 40) sur l'autre côté du vitrage isolant, parallèlement au plan du vitrage isolant, c'est-à-dire essentiellement verticalement.

2. Dispositif suivant la revendication 1, **caractérisé** par le fait que les éléments de soutien (3, 26) sont disposés sur des organes de transport (14, 27) sans fin se déplaçant dans la direction de transport, et que les éléments de soutien (3, 26) sont guidés, sur au moins un côté du vitrage isolant, indépendamment des éléments de soutien (3, 26) sur l'autre côté du vitrage isolant de façon réglable dans le bâti parallèlement au plan du vitrage isolant.

3. Dispositif suivant la revendication 1, **caractérisé** par le fait que les éléments de soutien sont constitués par des rouleaux (40) tournants fous et/ou entraînés, dont les axes de rotation (41) sont inclinés par rapport au plan du vitrage isolant, que les axes (41) des rouleaux (40) disposés sur les deux côtés du vitrage isolant sont situés dans des plans qui se coupent, et que les rouleaux (40) sont montés dans des supports (42) dont la distance réciproque, mesurée parallèlement au plan des vitrages isolants, est modifiable.

4. Dispositif suivant la revendication 1, **caractérisé** par le fait que les éléments de soutien sont constitués par deux bandes transporteuses sans fin, le cas échéant subdivisées, les brins des bandes transporteuses sans fin sur lesquels s'appuient les vitrages faisant des angles aigus avec le plan du vitrage isolant et étant situés dans des plans qui se coupent.

5. Dispositif suivant l'une des revendications 1 à 4, **caractérisé** par le fait que les éléments de soutien (3, 26, 40) sont, sur les deux côtés du vitrage isolant, réglables indépendamment les uns des autres parallèlement au plan du vitrage isolant, c'est-à-dire essentiellement verticalement.

6. Dispositif suivant l'une des revendications 1 à 5, **caractérisé** par le fait que la distance réciproque des éléments de soutien (3, 26, 40), mesurée perpendiculairement au plan du vitrage isolant, est modifiable.

7. Dispositif suivant la revendication 1, dont les éléments de soutien (3, 26) se déplaçant dans la direction de transport présentent des surfaces de soutien s'étendant de façon essentiellement horizontale, les surfaces de soutien s'engageant en dessous des plaques de verre (1, 1') du vitrage isolant, de l'extérieur et de préférence partiellement dans la zone de l'arête extérieure, et comprenant des mâchoires de pression (4, 25) se déplaçant dans la direction de transport, présentant des surfaces de pression s'étendant de façon essentiellement verticale et appliquées contre les surfaces extérieures des plaques de verre (1, 1') du vitrage isolant, **caractérisé** par le fait que les mâchoires de pression (25) et les éléments de soutien (26) sont disposés au moins sur un côté du vitrage isolant sur des supports séparés et que la distance réciproque entre les mâchoires de pression (25) et les éléments de soutien (26), mesurée parallèlement au plan du vitrage isolant, est modifiable.

8. Dispositif suivant la revendication 7, **caractérisé** par le fait que les éléments de soutien (26) séparés des mâchoires de pression (25) sont disposés sur le côté de l'appui latéral (7) pour le vitrage isolant.

9. Dispositif suivant la revendication 7 ou 8, **caractérisé** par le fait que des rails de guidage (5, 28) sont associés aussi bien aux mâchoires de pression (25) qu'aux éléments de soutien (26), rails sur lesquels ces mâchoires et éléments s'appuient depuis le haut.

10. Dispositif suivant l'une des revendications 7 à 9, **caractérisé** par le fait que les mâchoires de pression (25) et les éléments de soutien (26) sont fixés sur des organes transporteurs sans fin tels que chaînes transporteuses (14, 27) ou analogues, séparés les uns des autres et s'étendant parallèlement les uns aux autres.

11. Utilisation d'un dispositif suivant une ou plusieurs des revendications 7 à 10 pour le transport de vitrages isolants comprenant des plaques de verre (1, 1') de tailles différentes, une plaque de verre (1') dépassant de l'autre (1) sur au moins un côté, **caractérisée** par le fait que la plaque de verre (1) en retrait est soutenue par des éléments de soutien (3) présentant les mâchoires de pression (4) et la plaque de verre (1') en saillie est guidée latéralement par les mâchoires de pression (25) et est soutenue depuis le bas par des éléments de soutien (26) séparés des mâchoires de pression, les mâchoires de pression (4, 25) étant disposées essentiellement dans la zone de la branche inférieure du cadre intercalaire (19), s'étendant dans la direction de transport.

12. Utilisation suivant la revendication 11, **caractérisée** par le fait que la plaque de verre (1') en saillie est tournée vers l'appui latéral (7).
